# EUROPÄISCHE PATENTANMELDUNG

(11) **EP 1 300 654 A1**
(43) Veröffentlichungstag der Anmeldung: **09.04.2003**
(21) Anmeldenummer: 02021646.1
(22) Anmeldetag: 27.09.2002
(51) Int. Cl.: G01C 21/36, G01C 21/32, G06T 17/50, G09B 29/10

(54) **Verfahren und System zur Ermittlung von Kartendaten**

(30) Priorität: 28.09.2001 DE 10148224
(71) Anmelder: ROBERT BOSCH GMBH, 70442 Stuttgart (DE)
(72) Erfinder: Heinebrodt, Martin, 70176 Stuttgart (DE); Boecker, Juergen, 70499 Stuttgart (DE)

(57) **Zusammenfassung**

Die Erfindung betrifft ein Verfahren und eine Vorrichtung zur Ermittlung von Kartendaten, bei denen von einem Fahrzeug an verschiedenen Positionen Positionsdaten von einem globalen Positionsbestimmungs-System (GPS) aufgenommen werden,
Spurmessdaten von einem Spurerkennungssystem des Fahrzeuges ermittelt werden, und
aus den Positionsdaten und den Spurmessdaten Kartendaten erzeugt werden.

## Beschreibung

Die Erfindung bezieht sich auf ein Verfahren und eine Vorrichtung zur Ermittlung von Kartendaten.

Kraftfahrzeug-Navigationssysteme verwenden in der Regel digitalisierte Kartendaten bzw. Kartensätze, die Daten über Straßenverläufe und andere Eigenschaften der Straßen, insbesondere Größe, Geschwindigkeitsbegrenzungen, Ampeln usw. enthalten. Ein Fahrer kann mit Hilfe eines Positionsbestimmungssystems, insbesondere des Globalen Positionsbestimmungssystems (Global Positioning Systems - GPS) bzw. des Differentiellen Globalen Positionsbestimmungssystems (Differential Global Positioning System - DGPS) seine geographische Position bestimmen, so dass eine Bordrecheneinheit in einer für den geographischen Bereich relevanten Karte eine entsprechende Position bestimmen kann und dem Fahrer eine geeignete Fahrtroute ermitteln kann.

Die Kartendaten können von Kartendatenbanken entnommen werden, die zum einen auf lokalen Speichermedien, zum Beispiel CD-ROMs, direkt im Fahrzeug verfügbar sind, oder dem Fahrzeug auf Anfrage durch Datenfernübertragung übermittelt werden können. Die digitalen Kartendaten der Kartendatenbanken werden in der Regel durch Digitalisierung vorhandenen analogen Kartenmaterials erzeugt.

Die digitalen Kartendatenbanken eines Fahrzeug-Navigationssystems sind systemund altersbedingt in ihrem Umfang und der Genauigkeit beschränkt. Hierbei treten Fehler und Ungenauigkeiten insbesondere durch Ungenauigkeiten des vorhandenen Kartenmaterials und durch Fehler/Ungenauigkeiten bei der Digitalisierung und aufgrund späterer Baumaßnahmen auf. Weiterhin fehlen insbesondere neu gebaute Straßen und oftmals auch viele bei der Kartenerstellung nicht berücksichtigte kleinere Straßen. Somit sind die verwendeten digitalen Karten zum Teil unvollständig und weichen oftmals von den tatsächlichen geographischen Gegebenheiten ab.

In Fahrzeugen werden weiterhin zum Teil Fahrbahnerkennungssysteme verwendet, bei denen zum Beispiel mittels Videokameras Fahrbahneigenschaften ermittelt werden, insbesondere der Verlauf der Fahrbahn, Spurbegrenzungen und zum Teil die Beschilderung am Fahrbahnrand. Durch die von dem Fahrbahnerkennungssystem gelieferten Fahrbahndaten können dem Fahrer Informationen über die Fahrbahn angezeigt werden. Weiterhin ist auch die Unterstützung des Fahrers beim Führen des Fahrzeuges möglich.

Das erfindungsgemäße Verfahren nach Anspruch 1 sowie die erfindungsgemäße Vorrichtung nach Anspruch 12 weisen demgegenüber insbesondere den Vorteil auf, dass mit relativ geringem Aufwand eine Ermittlung zusätzlicher Kartendaten und/oder Verbesserung bestehender Kartendaten ermöglicht wird. Hierbei können insbesondere durch Zusammenfassung der von mehreren Fahrzeugen erzeugten Kartendaten eine hohe Genauigkeit und ein großer geographischer Bereich erfaßt werden, der im Laufe der Zeit jeweils erweitert und bezüglich der Genauigkeit verbessert werden kann, ohne dass hierzu ein erheblicher apparativer zusätzlicher Aufwand notwendig ist. Die Zusammenfassung der Kartendaten verschiedener Fahrzeuge kann insbesondere durch Mittelung und statistische Verarbeitung erfolgen.

Zusätzliche Kartendaten können hierbei insbesondere zu bisher nicht erfaßten Straßen, zum Beispiel bisher nicht berücksichtigte kleinere Straßen und Straßen in bisher nicht erfassten Gebieten, z.B. Neubaugebieten, erstellt werden. Weiterhin können bestehende Kartendaten korrigiert werden, wodurch Ungenauigkeiten zum Beispiel der Vermessung oder Kartenwiedergabe korrigiert und bauliche Änderungen seit der Kartenerstellung berücksichtigt werden können.

Die erfindungsgemäß erzeugten Kartendaten können zum einen in dem jeweiligen Fahrzeug auf einem lokalen Speichermedium gespeichert werden. In diesem Fall kann eine Korrektur gespeicherter Daten bei wiederholtem Befahren des betreffenden Straßenbereiches zum Beispiel durch statistische Mittelungsverfahren von einer Recheneinrichtung des Fahrzeuges vorgenommen werden. Vorteilhafterweise erfolgt alternativ oder zusätzlich hierzu eine zentrale Speicherung der von mehreren Fahrzeugen ermittelten Kartendaten, die wiederum nach geeigneter Bearbeitung, insbesondere statistischer Mittelung, den einzelnen Fahrzeugen auf lokalen Speichermedien oder über Datenfernübertragung zur Verfügung gestellt werden kann. Hierbei können insbesondere die in lokalen Speichermedien der Fahrzeuge gesammelten Kartendaten in Zeitabständen ausgelesen werden, zum Beispiel durch routinemäßiges Auslesen der Kartendaten während der periodischen Werkstattaufenthalte der Fahrzeuge. Ein derartiges Auslesen der fahrzeugeigenen Speichermedien kann wiederum durch ein nachfolgendes Eingeben neuer Kartendaten der globalen Datenbank ergänzt werden, so dass dem Fahrzeug jeweils aktuelle, durch statistische Mittelung sehr genaue Kartendaten lokal zur Verfügung gestellt werden, ohne hierzu entsprechende Speichermedien besorgen zu müssen.

Somit können erfindungsgemäß die von jedem einzelnen Fahrzeug durch Kartendaten erfaßten Gebiete fortlaufend erweitert und Kartendaten bereits erfaßter Gebiete präzisiert werden, ohne dass hierzu weitere Messeinrichtungen oder eine gesonderte Bedienung durch den Fahrer erforderlich ist. Durch Zusammenfassung und insbesondere Mittelung und statistische Verarbeitung der Kartendaten verschiedener Fahrzeuge erfolgt eine Kartenerweiterung und -präzisierung, an der alle Fahrzeuge partizipieren können. Das Straßennetz kann somit durch eine bei mehreren Fahrzeugen mitlaufende Funktion auf kostengünstige Weise mit geringem Aufwand und ohne Komforteinbuße der einzelnen Fahrer fortlaufend ergänzt und präzisiert werden.

Als Positionsdaten können insbesondere die Daten des satellitengestützten Globalen Positionsbestimmungssytems (Global Positioning System - GPS) benutzt werden. Weiterhin können auch Positionsdaten des Differentiellen Globalen Positionsbestimmungssystems (Differential Global Positioning System - DGPS) verwendet werden, bei dem die vom Satelliten ausgegebenen Positionsdaten mit von Bodenstationen abgegebenen Daten abgeglichen werden. Als erfindungsgemäß aufgenommene Fahrbahnmessdaten können sämtliche von Fahrbahnerkennungssystemen ausgegebenen Daten verwendet werden, insbesondere Daten über den Straßenverlauf, Spurbreite, Spurkrümmung in horizontaler und vertikaler Richtung, Krümmungsänderung, Fahrbahnbeschaffenheit sowie Daten aus der von dem Fahrbahnerkennungssystem erfaßten Beschilderung, zum Beispiel Geschwindigkeitsbegrenzungen, Vorfahrtsregelungen sowie Positionen von Verkehrskreuzungen, Ampeln usw.

Erfindungsgemäß können grundsätzlich weiterhin auch Daten über den Fahrzustand der einzelnen Fahrzeuge gespeichert und - insbesondere in anonymisierter Form - über mehrere Fahrzeuge gemittelt werden. Diese Daten können zum Beispiel die durchschnittliche Geschwindigkeit der Fahrzeuge an den betreffenden Stellen sowie die Stauhäufigkeit, insbesondere auch zu verschiedenen Tageszeiten, betreffen. Die hierdurch ermittelten Daten können insbesondere für Fahrzeug-Navigationssysteme als Kriterien für die Auswahl einer geeigneten Fahrtroute verwendet werden.

Die Erfindung wird im folgenden anhand der beiliegenden Zeichnungen an einigen Ausführungsformen näher erläutert. Es zeigen:
- Fig. 1: eine Darstellung eines Fahrzeuges auf einer Fahrbahn bei der Ermittlung von Kartendaten gemäß einer Ausführungsform der Erfindung;
- Fig. 2: ein Blockdiagramm einer Vorrichtung zur Ermittlung von Kartendaten in einem Fahrzeug gemäß einer Ausführungsform der Erfindung;
- Fig. 3: ein Blockdiagramm des erfindungsgemäßen Systemes zur Ermittlung von Kartendaten aus Kartendaten einzelner Fahrzeuge.

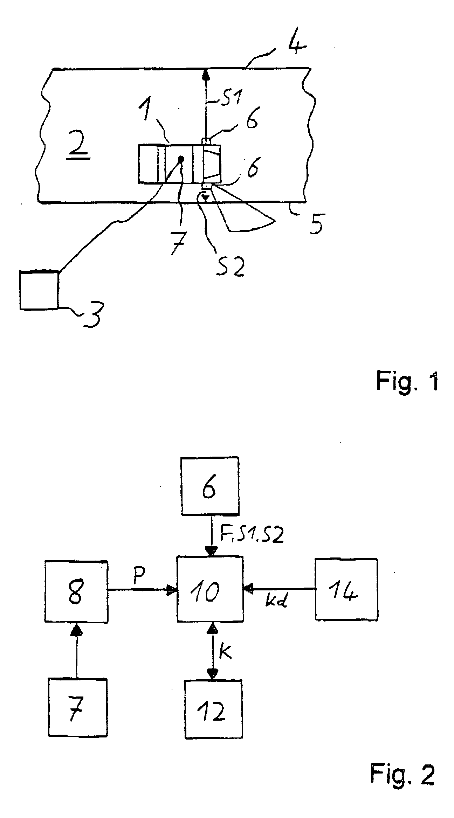

Gemäß Fig. 1 fährt ein Fahrzeug 1 auf einer Fahrbahn 2 mit Fahrbahnbegrenzungen 4 und 5. Von einer Fahrbahnerkennungseinrichtung 6, die zum Beispiel durch zwei Videokameras an dem Fahrzeug gebildet werden kann, werden Abstände S₁, S₂ des Fahrzeuges zu den Fahrbahnbegrenzungen 4, 5 ermittelt. Weiterhin können von dem Fahrbahnerkennungssystem 6 weitere Eigenschaften der Fahrbahn, zum Beispiel Spurkrümmung in horizontaler und vertikaler Richtung, Fahrbahneigenschaften und ggf. eine Beschilderung an oder neben der Fahrbahn erkannt werden. Das Fahrzeug 1 weist weiterhin eine Antenne 7 zum Empfang von GPS-Signalen eines Satellitensystems 3 auf. Weiterhin kann bei Verwendung eines DGPS zusätzlich eine geeignete Empfangseinrichtung zum Empfang von Signalen eines bodengestützten Senders vorgesehen sein.

Gemäß Fig. 2 werden die von der Antenne 7 aufgenommenen Signale in bekannter Weise einer GPS-Steuereinrichtung 8 eingegeben, die hieraus eine geographische Position des Fahrzeuges berechnet. Die so ermittelten Positionsdaten werden einer Kartendatenermittlungseinrichtung 10 des Fahrzeuges eingegeben. Von der Spurmesseinrichtung 6 werden entsprechend Fahrbahnmessdaten F an die Kartendatenermittlungseinrichtung 10 ausgegeben. Die Kartendatenermittlungseinrichtung 10 berechnet aus diesen Signalen Kartendaten K. Diese Kartendaten K können zum einen direkt in einem lokalen Speicher 12 abgespeichert werden, auf die die Kartendatenermittlungseinrichtung 10 später wieder zugreifen kann. Weiterhin kann die Kartendatenermittlungseinrichtung 14 auf ein im Fahrzeug befindliches Kartendatenspeichermedium, zum Beispiel eine CD-ROM mit vorgespeicherten Kartenspeicherdaten Kd zugreifen und diese mit den von ihr berechneten Kartendaten K vergleichen. In diesem Fall können in dem lokalen Speicher 12 korrigierte Kartendaten bzw. ergänzte Kartendaten abgespeichert werden, die sich aus den ermittelten Kartendaten K und den vorgespeicherten Kartendaten K ergeben. Eine nicht gezeigte Anzeigeeinrichtung oder eine nicht gezeigte Fahrdynamikregelung oder andere Systeme, die Informationen über die lokalen Fahrbahndaten benötigen (z.B. Tempomat, ACC), können auf die Kartendaten K des lokalen Speichers 12 und die Kartenspeicherdaten Kd des Kartendatenspeichermediums 14 zurückgreifen.

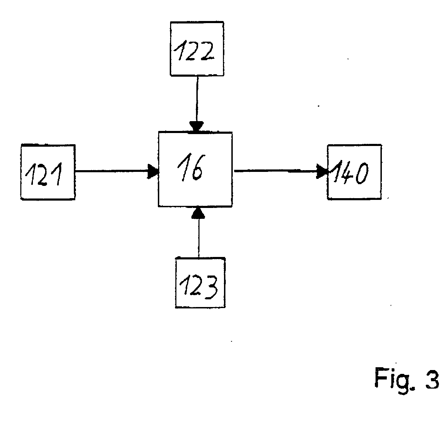

Die von den lokalen Speichern 121, 122, 123 verschiedener Fahrzeuge gesammelten Kartendaten K können gemäß Fig. 3 einer zentralen Auswerteeinrichtung 16 zugeführt werden, die hieraus neue Kartendatenspeichermedien 140 erzeugt, die nachfolgend in den Fahrzeugen anstelle der Kartendatenspeichermedien 14 verwendet werden. Die Kartendaten K können zum Beispiel bei Werkstattaufenthalten ausgelesen werden und bereits in anonymisierter Form abgespeichert oder beim Auslesen anonymisiert werden. Die zentrale Auswerteeinrichtung nimmt eine statistische Auswertung der Kartendaten K der einzelnen Fahrzeuge vor und bildet hieraus die neuen Kartendaten K.

## Patentansprüche

1. Verfahren zur Ermittlung von Kartendaten, bei dem von einem Fahrzeug an verschiedenen Positionen
Positionsdaten von einem Globalen Positionsbestimmungs-System (GPS) aufgenommen werden,
Fahrbahnmessdaten von einem Fahrbahnerkennungssystem des Fahrzeuges erfaßt werden, und
aus den Positionsdaten und den Fahrbahnmessdaten Kartendaten erzeugt werden.

2. Verfahren nach Anspruch 1, **dadurch gekennzeichnet, dass** die erfaßten Fahrbahnmessdaten Daten über eine Spurbreite und/oder eine Spurkrümmung in horizontaler und/oder vertikaler Richtung und/oder eine Krümmungsänderung und/oder eine Beschilderung enthalten.

3. Verfahren nach Anspruch 1 oder 2, **dadurch gekennzeichnet, dass** die Positionsdaten von einem satellitengestützen Globalen Positionsbestimmungssystem (GPS) und/oder einem Differentiellen Globalen Positionsbestimmungssystem (DGPS) aufgenommen werden.

4. Verfahren nach einem der vorigen Ansprüche, **dadurch gekennzeichnet, dass** die Kartendaten Informationen über Fahrbahnpositionen und/oder Fahrbahngrößen enthalten.

5. Verfahren nach einem der vorigen Ansprüche, **dadurch gekennzeichnet, dass** die erzeugten Kartendaten mit vorgespeicherten Kartendaten verglichen werden und zumindest ein Teil der vorgespeicherten durch die erzeugten Kartendaten geändert und/oder ergänzt werden.

6. Verfahren nach einem der vorigen Ansprüche, **dadurch gekennzeichnet, dass** die erzeugten Kartendaten in einer vorzugsweise im Fahrzeug vorgesehenen fahrzeugspezifischen Speichereinrichtung gespeichert werden.

7. Verfahren nach einem der vorigen Ansprüche, **dadurch gekennzeichnet, dass** von mehreren Fahrzeugen erzeugte Kartendaten in einer zentralen Auswerteund Speichereinrichtung gespeichert werden.

8. Verfahren nach Anspruch 7, **dadurch gekennzeichnet, dass** die von mehreren Fahrzeugen erzeugten Kartendaten in der zentralen Auswerte- und Speichereinrichtung verarbeitet, insbesondere statistisch verarbeitet, vorzugsweise gemittelt werden, und die verarbeiteten Kartendaten abgespeichert werden.

9. Verfahren nach Anspruch 7 oder 8, **dadurch gekennzeichnet, dass** die in den einzelnen Fahrzeugen gespeicherten Kartendaten in Zeitintervallen ausgelesen und zu der zentralen Auswerte- und Speichereinrichtung übertragen werden.

10. Vorrichtung zur Ermittlung von Kartendaten, mit :
einer Fahrbahnerkennungseinrichtung (6) zur Ausgabe von Fahrbahnmessdaten (F, S1, S2),
einer Positionsermittlungseinrichtung (7, 8) zur Ausgabe von geografischen Positionsdaten (P),
einer Kartendatenermittlungseinrichtung (10) zur Aufnahme der Fahrbahnmessdaten (F, S1, S2) und der geografischen Positionsdaten (P) und Ausgabe von Kartendaten, und
einer Speichereinrichtung zur Speicherung der von der Kartendatenermittlungseinrichtung (10) ermittelten Kartendaten (K).

11. Vorrichtung. nach Anspruch 10, **dadurch gekennzeichnet, dass** die Kartendatenermittlungseinrichtung (10) vorgespeicherte Kartenspeicherdaten (Kd) von vorzugsweise einem Kartendatenspeichermedium (14) aufnimmt und mit ermittelten Kartendaten (K) vergleicht.
